**Europäisches Patentamt**

**European Patent Office**

**Office européen des brevets**

(19)

(11) Publication number: **0 102 176**
**B1**

(12) # EUROPEAN PATENT SPECIFICATION

(45) Date of publication of patent specification: **16.09.87**

(51) Int. Cl.⁴: **G 01 N 29/04**

(21) Application number: **83304211.2**

(22) Date of filing: **20.07.83**

(54) **Method and apparatus for ultrasonic flaw detection.**

(30) Priority: **20.07.82 JP 127184/82**
**20.07.82 JP 127183/82**
**20.07.82 JP 127185/82**
**20.07.82 JP 127186/82**

(43) Date of publication of application:
**07.03.84 Bulletin 84/10**

(45) Publication of the grant of the patent:
**16.09.87 Bulletin 87/38**

(84) Designated Contracting States:
**DE GB NL**

(56) References cited:
**GB-A-1 453 065**
**US-A-3 280 621**
**US-A-3 977 236**

**MATERIALS EVOLUTION, June 1972 R.D.**
**SACHS et al. "Ultrasonic data analysis using a**
**computer", pages 121-125, 135**
**Patent Abstracts of Japan Vol. 6, no. 75, 12**
**May 1982**

(73) Proprietor: **KABUSHIKI KAISHA KOBE SEIKO**
**SHO**
**3-18 1-chome, Wakinohama-cho Chuo-ku**
**Kobe 651 (JP)**

(72) Inventor: **Suzuki, Norio**
**4-25, Hanayamadai**
**Kita-ku Kobe (JP)**
Inventor: **Kajikawa, Hiroshi**
**1-410,8, Tsuchiyama-cho**
**Nada-ku Kobe (JP)**
Inventor: **Nishihara, Tadashi**
**3-18 Hattori-minamimachi 5-chome**
**Toyonaka Osaka-fu (JP)**

(74) Representative: **Wright, Hugh Ronald et al**
**Brookes & Martin 52/54 High Holborn**
**London WC1V 6SE (GB)**

(56) References cited:
**SOVIET JOURNAL OF NONDESTRUCTIVE**
**TESTING, vol. 16, no. 3, 1980, New York A.K.**
**GURVICH et al. "Statement of the problem of**
**working out algorithms for identifying flaws in**
**welded joints on the basis of data of ultrasonic**
**quality control", pages 151-158**

## Description

This invention relates to a method and apparatus of ultrasonic flaw detection, and more particularly to a method and apparatus capable of detecting the directions, inclinations, sizes and depths of cavity voids or other internal flaws of various materials for judging the severity of the detected defects.

Cast stocks sometimes contain oblique cavity voids due to a spout of gases which take place in the casting stage. In this connection, few attempts have been made to analyse the shape of an internal defect in terms of its effect on the strength of a material intended for a specific use, except by simple definitions of the dimensions of a defect as projected on the surface. However, in view of the directional nature of applied stress on the material, the severity of a cavity void of a given size normally varies depending upon the direction in which it extends e.g. in the X-direction or Y-direction. Speaking inversely from the standpoint of the strength of a material, the allowable defect size in the X-direction of a material differs from that in the Y-direction. Under these circumstances, it is a matter of importance to detect the shapes (direction, inclination and size) of internal cavity defects with accuracy.

For the detection of internal defects as mentioned above, ultrasonic methods have been used in which an ultrasonic pulse is transmitted into a material and echoes from the internal defects are detected. However, the conventional ultrasonic methods only transmit and receive the ultrasonic pulses from a single probe scanning along the surface in predetermined directions in an inspection zone of the material. They provide very limited information of the defects from visually recognisable defect echo patterns which are displayed on a display medium and therefore are unable to determine very well the shapes of crosswise cavity defects.

In order to solve this problem, the present inventors developed a method which employs a rotating inclined probe to transmit and receive the ultrasonic pulse along a path intersecting the rotational axis in an inspection zone of a material under inspection, turning the probe through 360° about the rotational axis while transmitting and receiving ultrasonic pulses, and indicating the peak values of echoes received at a flaw detection gate as a detected flaw pattern on a display medium for judging therefrom the direction, inclination, size and depth of the detected defect. This method has a great advantage over the above-mentioned conventional methods in that it is capable of accurately determining the shapes of internal defects such as their direction, inclination and size. However, the inventors' prior method has a drawback that it takes a long time to detect the depth of a defect by a single proble, since the same operation has to be repeated for a number of times, varying the depth of inspection each time. Further, the above-mentioned methods all rely on the operator with regard to the judgement of the severity of a detected defect, which is relatively easy in the flaw detection of a small piece of material but difficult to adopt in the on-line flaw detection of large materials.

The use of a multiplicity of probes, as shown in US Patent Specification 3280621 will reduce the time to detect a defect by a single probe, but the particular apparatus described in that US Patent Specification cannot easily deal with defects at different depths.

Another arrangement is proposed in "Materials Evolution" June 1972 pages 121 to 125 and 135 in which a single probe is moved across a surface to be examined in a priority of different scans, the scans being arranged so as to pass along particular features, for example, parts of a weld line. The article also describes the method of processing the signals. However, the use of a single probe makes examination of an object difficult and indeed the arrangement seems to be aimed at looking for flaws in a known part of an object, for example, a weld.

According to a first aspect of the present invention, there is provided an ultrasonic flaw detection method for detecting internal cavity defects in a material, comprising:

providing on a rotary body a plurality of probes lying on equiangularly spaced radii and having the same angle of inclination with respect to the rotation axis, said probes being adapted to transmit and receive ultrasonic pulses along respective paths which intersect the axis of rotation of said rotary body;

turning said rotary body to revolve said rotary body; 360° about said axis of rotation while transmitting and receiving said ultrasonic pulses;

producing detected flaw patterns from each respective direction of incidence of said ultrasonic beams, from the peak values of the echoes received by the respective probes;

characterised by positioning said probes at different distances from the axis of rotation so that said respective paths intersect said axis of rotation at different depths in an inspection zone within the material when positioned opposite to said probes; and,

deciphering the direction, inclination, size and depth of a detected defect from correlation processing of said detected flaw patterns with a number of predetermined reference patterns to judge the severity of the detected defect.

According to the present invention, there is also provided an apparatus for ultrasonic flaw detection for recognising internal cavity defects in a material, comprising:

a plurality of probes mounted on a rotary body on equiangularly spaced radii and having the same angle of inclination with respect to the axis of rotation of said rotary body for providing a plurality of channels for transmitting and receiving ultrasonic pulses along respective paths which intersect the axis of rotation of said rotary body drive means for turning said rotary body to revolve said probes, through 360° about said axis of rotation while transmitting and receiving said ultrasonic pulses;

characterised in that said probes are mounted at different distances from the axis of rotation so that said paths intersect the axis of rotation at different depths in an inspection zone within the material when positioned opposite said probes; peak holding and memory means are provided for each one of said channels for producing and storing detected flaw patterns for each direction of incidence of said ultrasonic beam from the peak values of echoes received by the respective channels;

a correlator is provided for deciphering the direction, inclination, size and depth of said detected defect by correlation processing of said detected flaw patterns with a number of predetermined reference patterns; and

means is provided for judging the severity of the detected defect according to the results of said correlation processing.

The above and other advantages of the present invention will become apparent from the following description and appended claims, taken in conjunction with the accompanying drawings which show by way of example some illustrative embodiments of the invention.

In the accompanying drawings:

Figures 1(A) and 1(B) are diagrammatic illustrations showing the path of an ultrasonic pulse;

Figure 2 is a waveform diagram of a detected flaw pattern;

Figure 3 is a diagrammatic illustration explanatory of the correlation processing;

Figure 4 is a waveform diagram of an actually detected flaw pattern;

Figure 5 is a sectional view of a probe rotating apparatus;

Figure 6 is a bottom view of a probe holder;

Figure 7 is a diagrammatic illustration of the inspection zone;

Figure 8 is a block diagram of flaw detection according to the invention;

Figure 9 is a diagram of waveforms obtained after D/A conversion of the output signals of a digital correlator;

Figure 10 is a waveform diagram of a detected flaw pattern obtained from a defect with an inclination of $\eta=24°$;

Figures 11(A) and 11(B) are diagrammatic illustrations of the same defect;

Figure 12 is a graph of the defect length against the ratio of the maximum correlation value;

Figure 13 is a block diagram;

Figure 14 is a flowchart of flaw detection;

Figure 15 is a fragmentary plan view of a propeller;

Figures 16(A) and 16(B) are diagrammatic illustrations explanatory of a harmful defect;

Figure 17 is a graph of the depth at the top end of a defect against the projected length of allowable flaw;

Figures 18(A) and 18(B) are graphs explanatory of the relationship between the input voltage and the number of significant bits;

Figure 19 is a graph explanatory of the resolution of an A/D converter;

Figure 20 is a block diagram of a pre-processing circuit;

Figure 21 is a block diagram of a data selector;

Figure 22 is a diagrammatic view of a flaw detector of a modified construction.

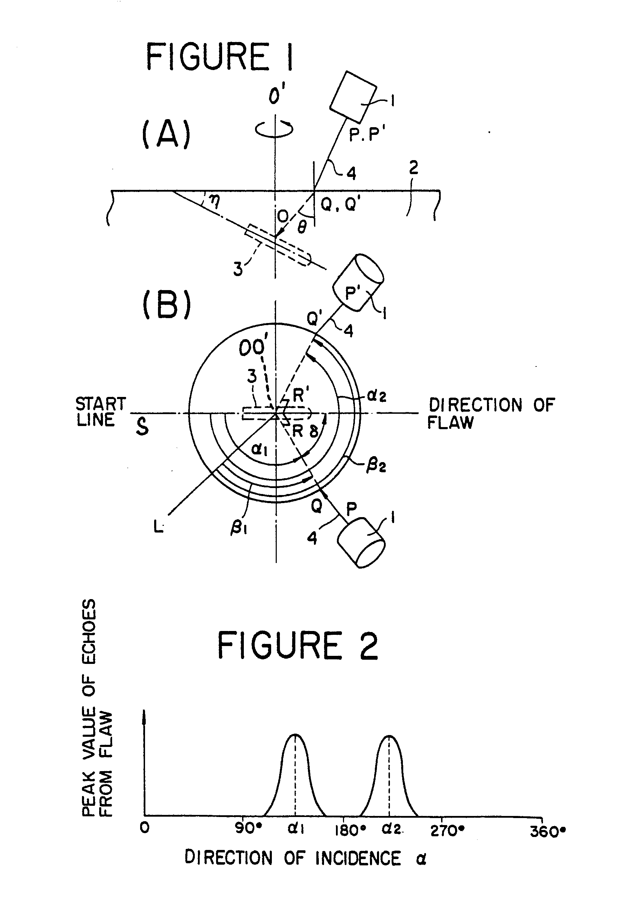

Firstly, the principles of the present embodiment of the invention are explained with reference to Figures 1(A) and 1(B) which show the path of an ultrasonic pulse 4 in an angled beam ultrasonic flaw detector using a probe 1, the beam having a refraction angle of $\theta$, when detecting a cavity void 3 in a material 2 which void 3 extends with an angle of inclination $\eta(\theta \geq \eta)$ to the plane of the surface of the material 2. As seen in Figures 1(A) and 1(B), as the probe 1 is rotated so as to make one revolution in the arrowed direction about the axis of rotation (O.O') from the start line position O . S (i.e., the position in the longitudinal direction of the defect 3 as projected onto the surface of the material 2) while transmitting an ultrasonic pulse 4, the direction of the incident ultrasonic pulse becomes perpendicular to the defect 3 at two different positions, namely, at the angular positions P, P' spaced from the start line OS by rotational angles $\alpha_1$ and $\alpha_2$. At these positions, the ultrasonic pulse follows the paths P→Q→R→Q→P and P'→Q'→R'→Q'→R' respectively in Figure 1. From simple geometric calculations it is known that the angles $\alpha$, $\eta$ and $\theta$ have the following relationship as expressed by the Equation (1).

$$\cos\left(\frac{\alpha_2-\alpha_1}{2}\right) = \frac{\tan \eta}{\tan \theta} \tag{1}$$

Figure 2 shows a detected flaw pattern obtained by plotting the direction of incidence $\alpha$ against the peak values of the ultrasonic echoes 4 which were actually transmitted and received sequentially whilst the probe 1 was rotated in the manner shown in Figure 1(B). The angular characteristics (i.e. the position of the maxima) of the detected flaw pattern are defined by the Equation (1), and the maximum peak value depends on the size of the defect 3. In order to determine the relationship between the size of the defect 3 and the height of the echoes, one can use either the Distance-Amplitude Curves used in conventional flaw detection or one can actually measure the values of artificial flaws. It will be therefore understood that the flaw detection pattern of Figure 2 contains data with regard to the direction, inclination and size of the defect 3.

In practice the direction of the start line is selected such that it coincides with a particular direction related to the shape of the material 2 to be inspected, for example, the longitudinal direction OL of the material 2, so that, in practice the defect 3 is measured from the start line OL. In this instance, the direction of the defect 3 is expressed by the following formulae.

$$\frac{\beta_1+\beta_2}{2}(\beta_2-\beta_1\leq180°) \tag{2}$$

$$\frac{\beta_1+\beta_2}{2}+180° \ (\beta_2-\beta_1\geq180°) \tag{3}$$

and the inclination $\eta$ of the defect 3 is expressed by the following equations.

$$\cos\left(\frac{\beta_2-\beta_1}{2}\right)=\frac{\tan\eta}{\tan\theta}, \quad (\beta_2-\beta_1\leq180°) \tag{4}$$

$$\cos\left(180°-\frac{\beta_2-\beta_1}{2}\right)=\frac{\tan\eta}{\tan\theta}, \quad (\beta_2-\beta_1\geq180°) \tag{5}$$

A man skilled in pattern recognition can perform these operations though it takes a great deal of time. On the other hand, from a practical standpoint, it is usually sufficient if the detection of the inclination $\eta$ of the defect 3 is within the range of 0°—45° with an error of ±2.5°. In that case, one may adopt a correlation method to allow the flaw detector to automatically make the foregoing calculations automatically by a correlation processing circuit.

The correlation processing is expressed by the following equation.

$$c(S)=\frac{1}{360}\int_0^{360}r(\alpha)f(\alpha+S)d\alpha \tag{6}$$

in which $f(\alpha)$ and $r(\alpha)$ are arbitrary functions defined by $0\leq\alpha\leq360$. The correlation processing which has recently been applied to pattern recognition in image processing technology and to error corrections in communication technology is used in the present embodiment of the invention to compare the detected flaw pattern of an unknown defect with a number of reference patterns, to determine the reference flaw pattern which is most similar to the detected flaw pattern.

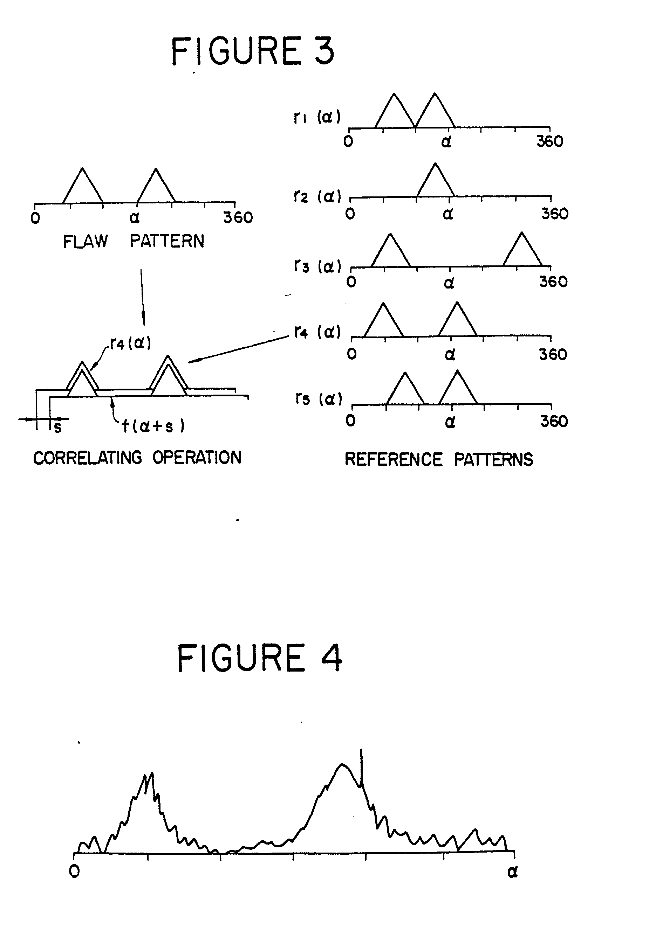

The operation of the correlation processing is explained briefly with reference to Figure 3 which shows by way of example a single detected flaw pattern and five kinds of reference patterns $r_1(\alpha)$ to $r_5(\alpha)$. A man skilled in pattern recognition would compare the detected flaw pattern with the reference patterns by comparing the number of peaks, the peak-to-peak distance and the angles of the slopes. He would then check the degree of similarity to each reference pattern and make a decision that the detected flaw pattern is identical to the pattern $r_4(\alpha)$ because of its close conformity. This operation is called correlation processing and, in order to check the conformity quantitatively, Equation (6) is introduced for determining a value which is proportional to the sum of the products of the overlapping portions. The symbol S in Equation (6) indicates the angular difference (see Figure 3) between the two patterns in the direction of the horizontal axis of Figure 3 when the two patterns are superimposed for comparison.

In this instance, the reference patterns are prepared from actually measured values derived from artificial cylindrical drilled holes or by calculation according to Equation (1). Since the characteristics (directions, inclinations, etc.) of the artificial cylindrical drilled holes are known, the amount of deviation S gives the discrepancy between the direction of a cylindrical drilled hole and a detected defect.

In the application of the above-described principles, a number of reference patterns are prepared, for example, from 10 kinds of cylindrical drilled holes which are the same with respect to the direction, length and depth of the reflecting surface but which have different angles of inclination $\eta$ of 0, 5, 10, 15, 20, 25, 30, 35, 40 and 45 degrees, respectively. A detected flaw detection pattern may then be correlated with the respective reference patterns for the detection of the direction and inclination of the defect. In this way, the defect can be easily classified if the values of the maxima of the reference patterns are set at a predetermined level.

The correlation method which is often used for the improvement of signal to noise ratio in signal processing can also be effectively applied to those cases where the detected flaw pattern contains noise as shown in Figure 4. In actual operation, the detected flaw patterns usually contain such noise so that it becomes extremely difficult for the machines to measure the number of peaks and the peak-to-peak distances correctly.

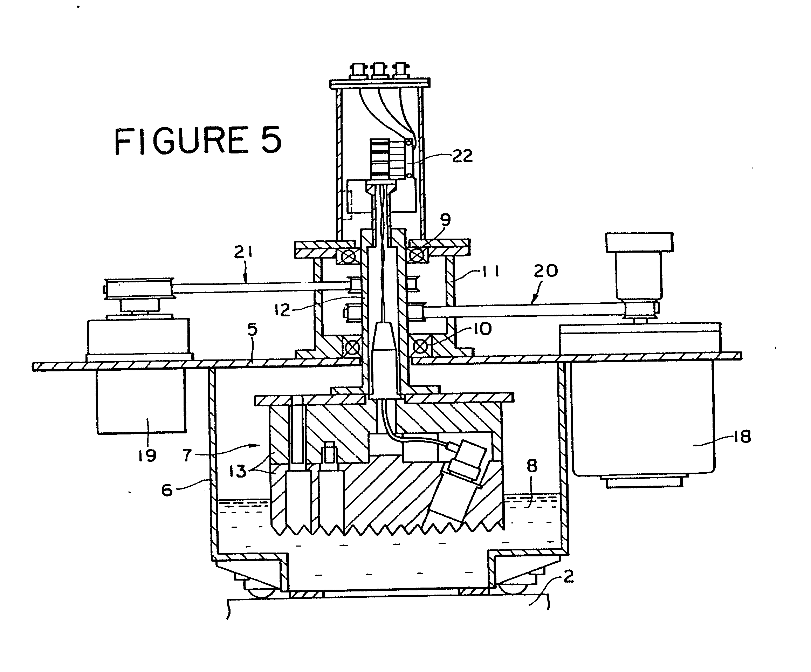

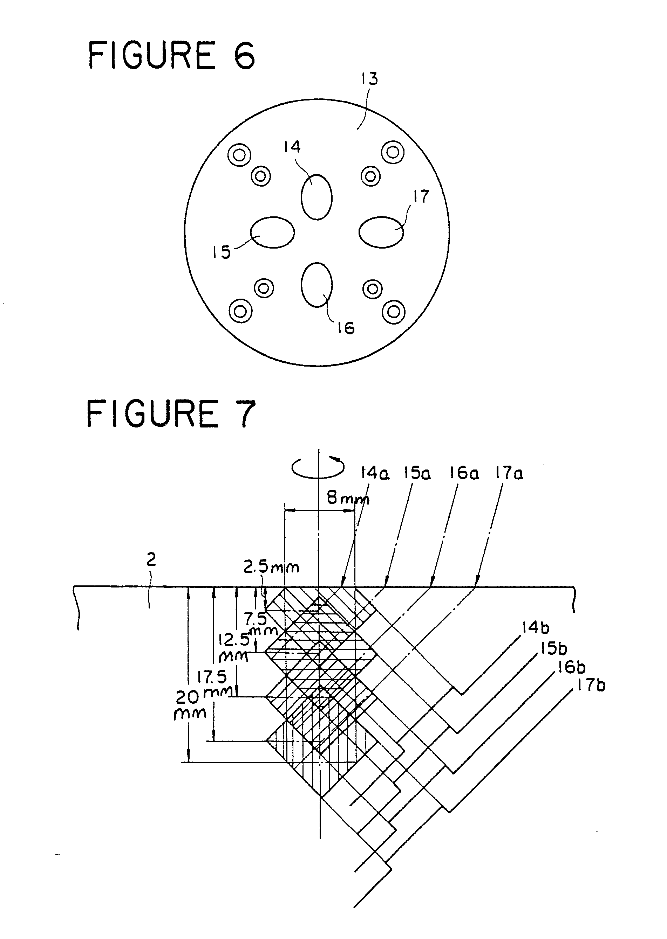

Referring now to Figures 5 and 6, there is illustrated an apparatus for carrying out a flaw detection method of the present invention, employing four probes. In these Figures, there is provided a support plate 5 which is movable in the directions of X- and Y-axes for scanning purposes, and supports on its underside a water tank 6 which is movable across the material 2 to be inspected. The water tank 6 accommodates a probe rotating mechanism 7 and contains water 8.

The probe rotating mechanism 7 includes a cylindrical shaft 12 which is rotatably supported in a bearing box 11 on the support plate 5 by bearings 9 and 10, and a probe holder 13 which is mounted at the lower end of this shaft 12 and has four inclined probes 14 to 17 built thereinto at intervals of 90° in the circumferential direction. The probes 14 to 17 are adapted to inspect at a range of 20 mm from the surface of the material 2 at a scanning pitch of 8 mm in this particular example although the invention is not limited to any specific range or pitch. The respective probes 14 to 17 are arranged to transmit ultrasonic pulses 14a to 17a with a refraction angle $\theta$ of 45° and a pulse diameter of 9.2 mm and are located at different positions from the axis of rotation so that the ultrasonic beams 14a to 17a intersect the axis of rotation at depths of 2.5 mm, 7.5 mm, 12.5 mm and 17.5 mm respectively. Detection gates 14b to 17b receive echoes at 45° to the axis of rotation over a predetermined time interval.

The four diamond shaped hatched areas of Figure 7 show the inspection zones for the four probes 14 to 17. The outline of each hatched area is, therefore, defined (a) by the width of the pulse from the probe (9.2 mm) (which defines the distance between those two sides of the respective hatched area which extend upwardly from left to right) and (b) by the time interval (translated into a spatial configuration) during which the respective detector gate receives the echoes (which defines the distance between those two sides of the respective hatched area which extend upwardly from right to left). Therefore, defects within the inspection zone, more specifically, within the diamond-shaped areas of Figure 7 can be detected from the echoes received at the respective detection gates 14b to 17b during one revolution of the probes 14 to 17. In Figure 5, a motor 18 driving the probe rotating mechanism 7, and a rotary encoder 19 which is mounted on the support plate 5 and detects the rotational angle of the probe rotating mechanism 7 are both respectively rotationally coupled with the shaft 12 through belt drive mechanism 20 and 21. A slip ring 22 transmits and receives ultrasonic signals to and from the respective probes 14 to 17 on the probe rotating mechanism 7.

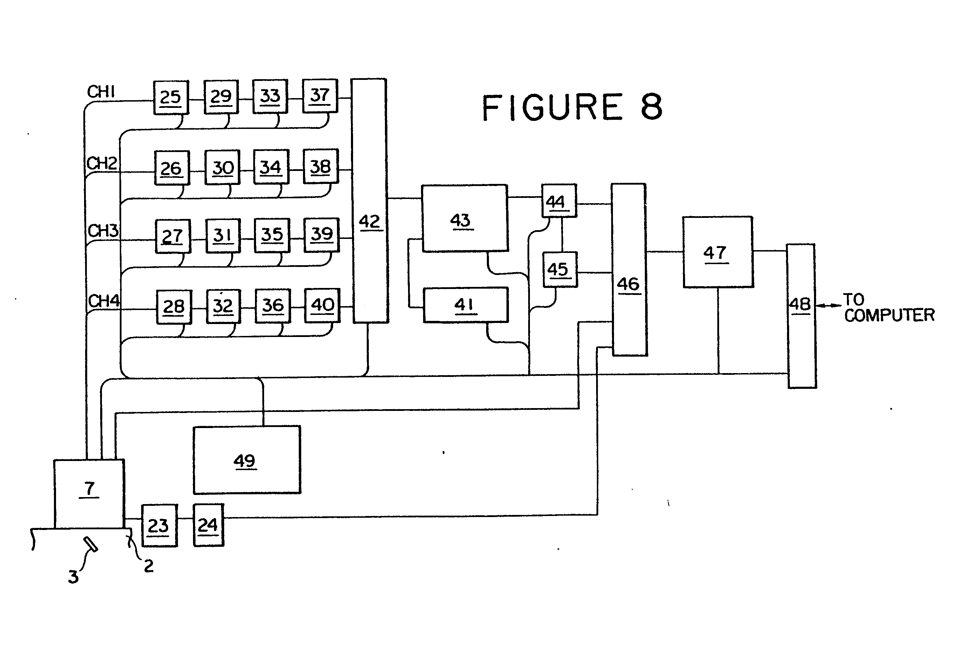

A flaw detection operation is hereafter described with reference to the block diagram of the signal processor shown in Figure 8. A scan mechanism 23 scans the probe rotating mechanism 7 in the directions of X- and Y-axes, and a controller 24 controls the scan mechanism 23. The signal processor includes pulser receivers provided respectively for the four channels $CH_1$ to $CH_4$ of the probes 14 to 17 and analogue peak holding circuits 29 to 32. In use, ultrasonic pulses 14a to 17a are transmitted into the material 2 from the probes 14 to 17 which are rotated by the probe rotating mechanism 7, and the pulser receivers 25 to 28 through the probes 14 to 17, respectively, detecting in the analogue peak holding circuits 29 to 32 the peak values of the signals appearing at the flaw detection gates 14b to 17b. Analogue to digital converters 33 to 36 convert the peak values into digital signals, and shift registers 37 to 40 temporarily store the peak values at every (360/128)° (i.e. in 128 directions of incidence), which thereby provide the flaw detection patterns. The direction of incidence is detected by the rotary encoder 19 and, needless to say, a detected flaw pattern is obtained from each channel $CH_1$ to $CH_4$ corresponding to the signal detected from the direction of incidence. A digital correlator 43 performs the correlation processing of detected flaw patterns for each respective channel the signals from the four channels being sequentially fed thereto through a data selector 42, and the reference patterns are stored in a memory 41. The maximum values of the correlation of the respective channels are detected by a digital peak detector 44, while simultaneously the amounts of deviation S are detected by a data latch 45. The maximum correlation values $Cmi$ ($i=1, 2, 3, 4$), the amounts of deviation $Si$ ($i=1, 2, 3, 4$) and the current position $(x, y)$ of the scan mechanism 23 which is detected in this manner are put in a predetermined order and sorted in the shift register 47. The signal processing after the digital correlator 43 can be carried out by software by the use of a computer as will be described hereinafter although this method takes a long time.

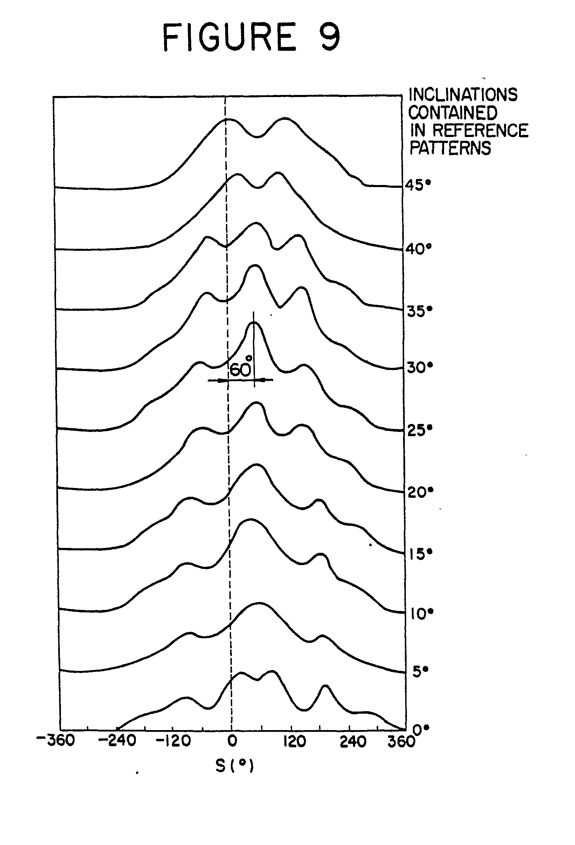

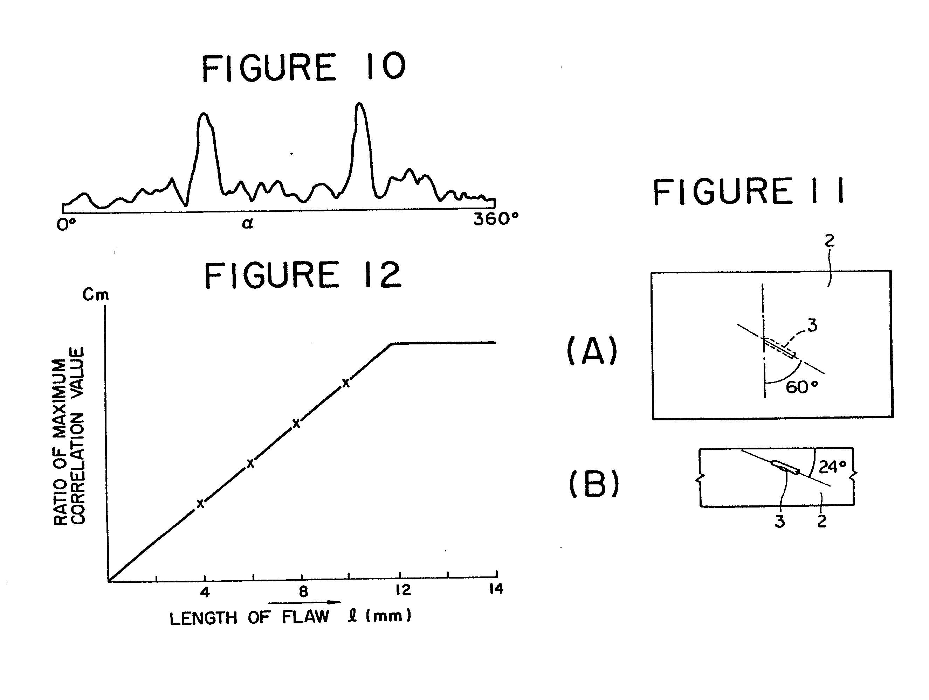

The output of the digital correlator 43 after digital to analogue conversion is shown in Figure 9, and the corresponding detected flaw pattern is shown in Figure 10. The condition of the defect 3 itself is shown in Figures 11(A) and 11(B). The inclination $\eta$ of the defect 3 is 24°, and it is seen from Figure 9 that it has the closest correlation with the reference pattern of 25°. It is also known from the +60° deviation of the peak value of correlation from the centre (=0°) that the direction of the defect 3 is at the angle of 60° with a predetermined direction of the material 2.

These judgements are made easily and at high speed in an actual operation by transferring the data of the shift register 47 to the computer (not shown) through an interface 48. The data which is transferred to the computer is processed in the following manner.

As shown in Figure 7, the ultrasonic pulses 14a to 17a of the respective channels are overlapped within the material 2, so that significant correlation values appear in several different channels for a single defect 3. Therefore, in such a case, the depth of the reflecting surface of the defect 3 is calculated according to the following equation.

$$d = \frac{\sum\limits_{i=1}^{4} Cmi \cdot di}{\sum\limits_{i=1}^{4} Cmi} \tag{7}$$

Next the deviation of the reflecting surface of the defect 3 from the central axis of the ultrasonic beam is corrected according to the following equation.

$$Cmi' = \frac{Cmi}{1 - k\,|\,d - di\,|} \tag{8}$$

in which $k$ is a proportional constant depending upon the probe. The length of the defect 3 is judged from the value of $Cmi'$ thus obtained. Figure 12 shows the maximum correlation values (marked with "x") between a defect with a diameter of $\phi$ 2 mm, a length of I and an inclination of 35° and a reference pattern with an inclination $\eta = 35°$. It is possible to calculate from this data the effects of deviations of the reflecting surface from the central axis of the ultrasonic beam on the correlation value, to determine the value of $k$.

During the flaw detecting operation, the signals of the X—Y position of the probe rotating mechanism 7 (corresponding to the position of the defect) are fed from the controller 24 through the data selector 46 for storage in the shift register 47 and transferred to the computer through the interface 48 along with the data of the maximum correlation values and the like. This data is used on a graphic display to give the position of the defect 3 when the calculated image of the defect is displayed. A timing controller 49 is shown in Figure 8. If desired, the probe rotating mechanism 7 may be replaced by electronic scan type probes, but they are too expensive for factory use at the present stage.

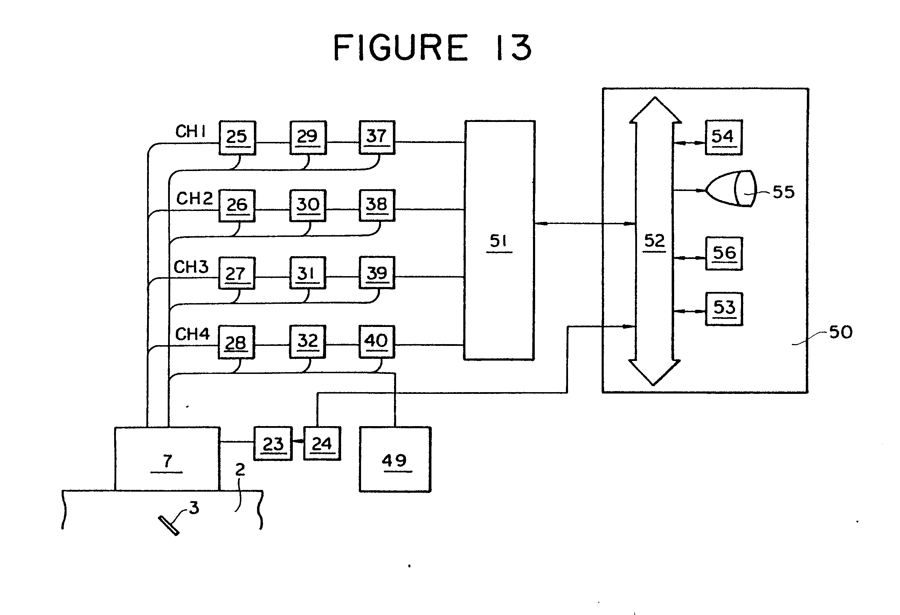

Reference is now had to the block diagram of Figure 13 which shows the process flow used by the software of the computer 50 during recognition of the shape of the defect 3, in which the components common to Figure 8 are designated by similar reference numerals and their explanations are omitted to avoid repetition. In this case, the peak values of echoes which are obtained during one revolution through the pulser receivers 25 to 28, analogue peak holding circuits 29 to 32 and analogue to digital converters 33 to 36 according to the rotational angles of the probes 14 to 17 are collected and stored in the memory 51 to form the detected flaw patterns. The memory 51 serves as an external memory of the computer 50, and the detected flaw patterns in the memory 51 are transferred by DMA to an internal memory 53 through an interface 52 for the computer 50 before the probes 14 to 17 start to receive ultrasonic pulses from the next revolution. The computer 50 includes a CPU 54 (central processing unit), a cathode ray tube 55 for displaying the detected flaw data, and a floppy disk 55 for storing the flaw data.

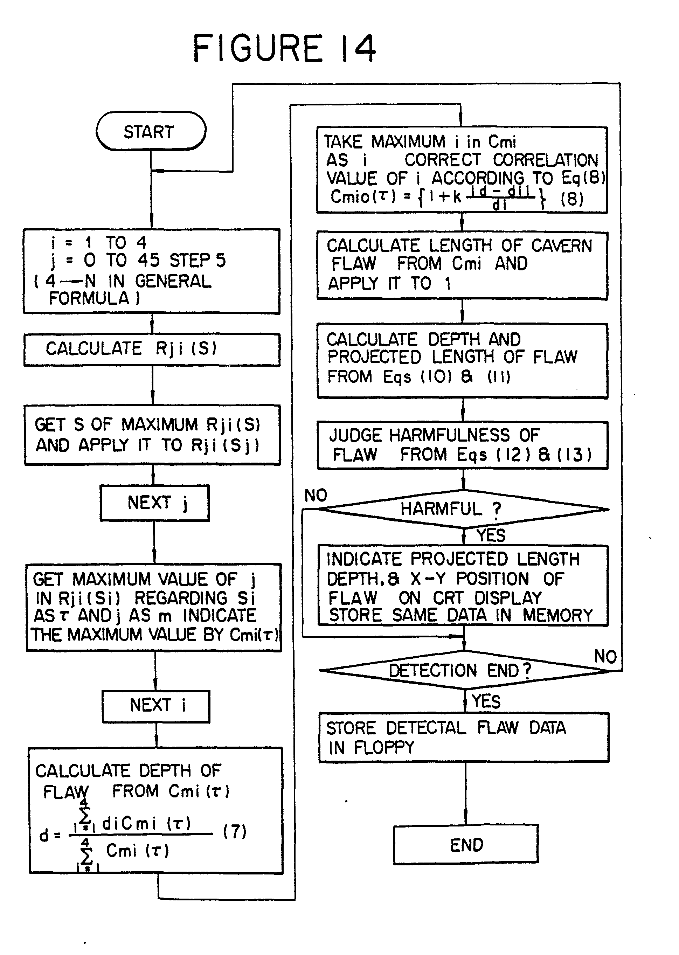

The computer processes the signals according to the steps shown in the flowchart of Figure 14, in which the detected flaw pattern is indicated by $Ai(\alpha)$. The subscripts "i" and "$\alpha$" indicate the channel and the rotational angle, respectively. The reference patterns are indicated by $Rj(\alpha)$ in which the subscript "j" is the inclination of the defect. The correlation between $Ai(\alpha)$ and $Rj(\alpha)$ is expressed by the following equation.

$$Rji(S) = \frac{1}{360} \int_{0}^{360} Ai(\alpha) Rj(\alpha + S) d\alpha \tag{9}$$

The equation (9) is generally available in the form of a software package.

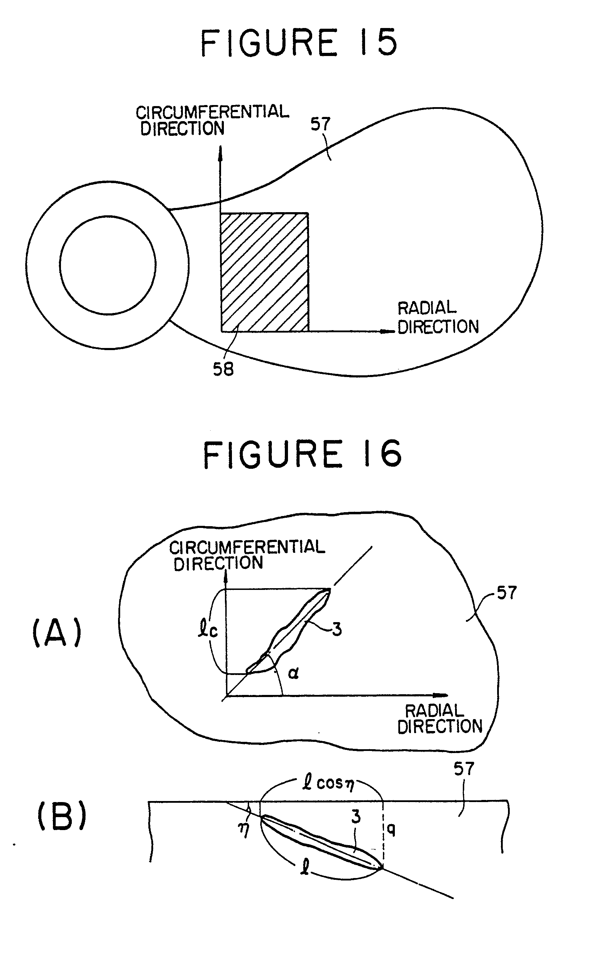

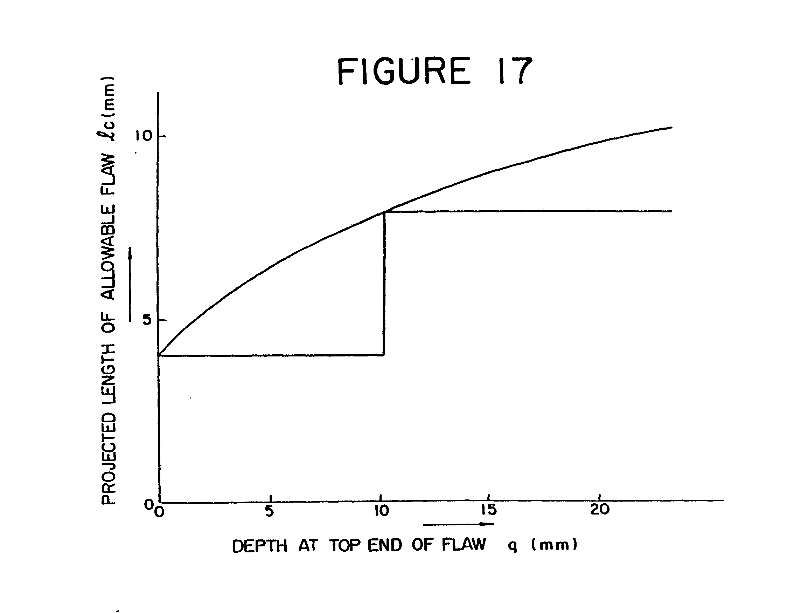

A preferred method of the invention will now be described by way of an embodiment applied to flaw detection in a cast marine propeller 57. In this case, the inspection area for the propeller 57 is 1200×800 mm/blade as indicated by a hatched area in Figure 15 and the depth of inspection from the blade surface is 20 mm. Among the cavity defects which may exist in the inspection area 58, only harmful defects are selectively displayed on the CRT (cathode ray tube). The degree of severity is judged by the projected length $l_c$ in the circumferential direction which is the direction in which the stress is applied. The degree of severity also varies depending upon the depth $q$ of the top end of the defect 3. Therefore, the severity of the defect 3 is defined by the projected length $l_c$ of the defect shown in Figures 16(A) and 16(B) and the depth $q$ at the top end of the defect 3 shown in Figure 17. Consequently, the computer 50 performs the following operations in the final processing stage.

(1) Calculation of the projected defect length:

$$l_c = \cos \eta \times \sin \alpha \tag{10}$$

in which I is the actual length of the defect, $\eta$ is its inclination and $\alpha$ is its direction from a start line in the radial direction.

(2) Calculation of the depth q at the top end:

$$q = \text{Max} \left[ 0, \left( d - \frac{1}{2} I \sin \eta \right) \right] \qquad (11)$$

in which d is the depth at the centre of the defect.

(3) Discrimination of harmful defects:

$$0 \leqq q < 10 \text{ and } I_0 \geqq 4 \text{ mm} \qquad (12)$$

$$0 \leqq q \leqq 20 \text{ and } I_0 \geqq 8 \text{ mm} \qquad (13)$$

The severity of a defect is defined by two steps in terms of allowable projected dimensions of the defect.

Thus the computer 50 performs the calculations (10) and (11) as shown in the flowchart of Figure 15, and, if either one of the conditions (12) and (13) is satisfied, displays the calculated image of any harmful defect on the printer along with their positional data.

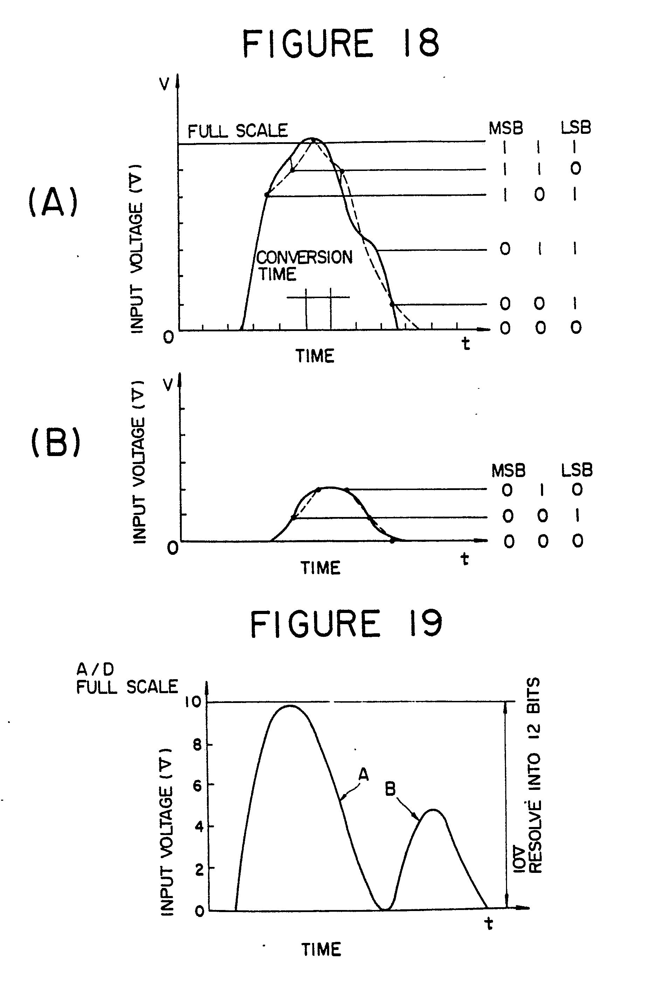

In the digital signal processing as described above, it is the usual practice to use an analogue to digital converter or converters with a vertical resolution of 8—10 bits. As shown in Figure 18, the vertical resolution is defined by the maximum value of the input of the analogue to digital converter. Thus, Figure 18 shows the relationship between the input voltage of the analogue to digital converter and the number of its effective bits, wherein indicated at (A) is a sufficient input voltage and at (B) an insufficient input voltage, with binary values of 3-bit analogue to digital conversion given on the right side in each case. The points which are connected by broken line are the sampled values before analogue to digital conversion. As is clear from Figures 18(A) and 18(B), the number of effective bits is 3 when the input has a sufficient voltage but it becomes 2 or less when the voltage of the input is insufficient, resulting in a correspondingly lower resolution. Therefore, in order to maximise the resolution of the analogue to digital converter effectively, it is necessary to apply an input voltage which is close to the full scale and, in practical circuits, an amplifier is often inserted in a stage before the analogue to digital converter to adjust the input signal to a level which will ensure the maximum resolution. However, in most cases of non-destructive testing the voltage of the input signal is not known beforehand, so that adjustment of the input signal by an amplifier often leads to trouble such as reduction in the resolution of small signals and too much amplification of large signals. In order to overcome these troubles, the analogue to digital converter should have a high resolution even with regard to input signals of small amplitudes. However, difficulties are often encountered in improving the resolution of the analogue to digital converter due to the limitations which are imposed on the signal processing circuits of subsequent stages.

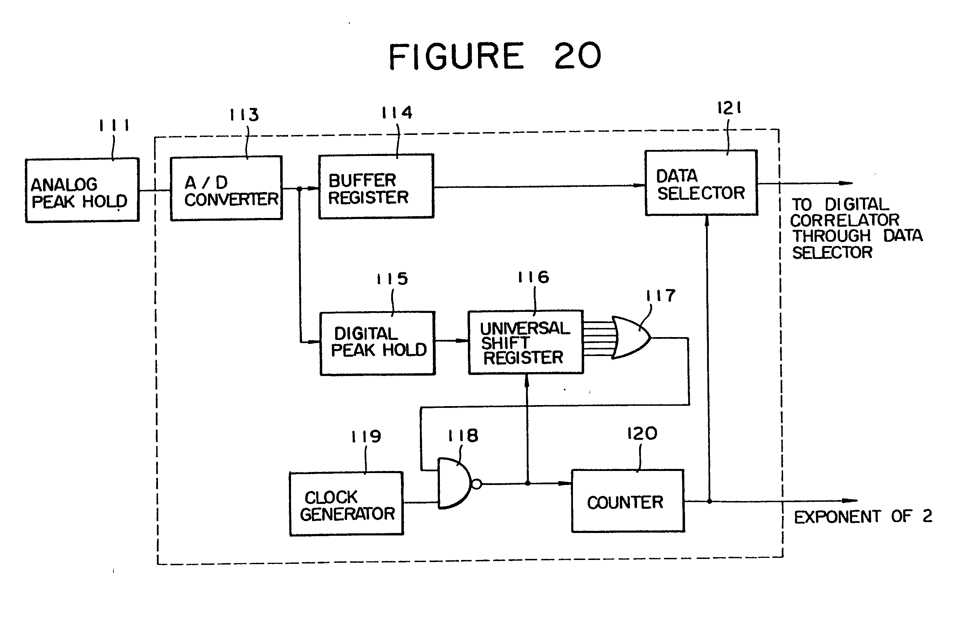

Figure 20 illustrates a pre-processing circuit which may be employed in the circuit of Figure 8 to overcome the above-mentioned limitations which is adapted to operate according to the following principles.

(1) The analogue to digital conversion is executed at a high resolution of, for example, 12 bits to ensure a sufficient resolution even for input signals of small amplitudes. Consequently, where a full-scale input of 10 V is resolved by 12 bits as shown in Figure 19, the analogue to digital converter can have a resolution of about 12 bits with respect to a signal of large amplitude as shown at (a) and at the same time a resolution of about 11 bits with respect to a signal of small amplitude as shown at (b).

(2) If the resolution of a signal processing circuit which is located in a later stage is 6 bits, for example, so that the 12-bit signal $x$ cannot be transferred to this later stage the signal $x$ can be broken up into the form of $x = y \times 2^N$ in which $x$ and $y$ are binary numbers of $x < 2^{12}$ and $y < 2^6$, respectively, and N is 0 or an integer of or smaller than 6.

(3) The value of $y$ is transferred to the signal processing circuit in the earlier stage. In this particular example, the signal processing is a linear calculation (calculations involved in digital signal processing are often linear calculations), the final results being obtained by multiplying the results of the above-mentioned calculation by $2^N$.

If the signal of 10 V is directly resolved into 6 bits in this sort of signal processing, the resolution of a signal smaller than 1 V is $64 (= 2^6) \times 1/10 = 6.4 < 2^3$ and thus smaller than 3 bits. However, according to the above-described method, the same small signal is converted into $4096 (= 2^{12}) \times 1/10 = 40.96 < 2^6$ so that, regarding N=0, it can be expressed directly by a binary number of up to 6 bits, retaining a resolution greater than 5 bits.

Referring to Figure 20, the pre-processing circuit 112 includes analogue to digital converter 113 (corresponding to the analogue to digital converter 33 to 36 of Figure 8), buffer register 114, digital peak hold circuit 115, universal shift register 116, OR gate 117, NAND gate 118, clock generator 119, counter 120 and data selector 121 (corresponding to the data selector 42 in Figure 8). The peak hold circuit 111 corresponds to the peak holding circuit 29 of Figure 8. The analogue to digital converter 113 of the pre-processing circuit 112 has a 12-bit resolution although a correlator 122 in the previous stage is of 6 bits.

7

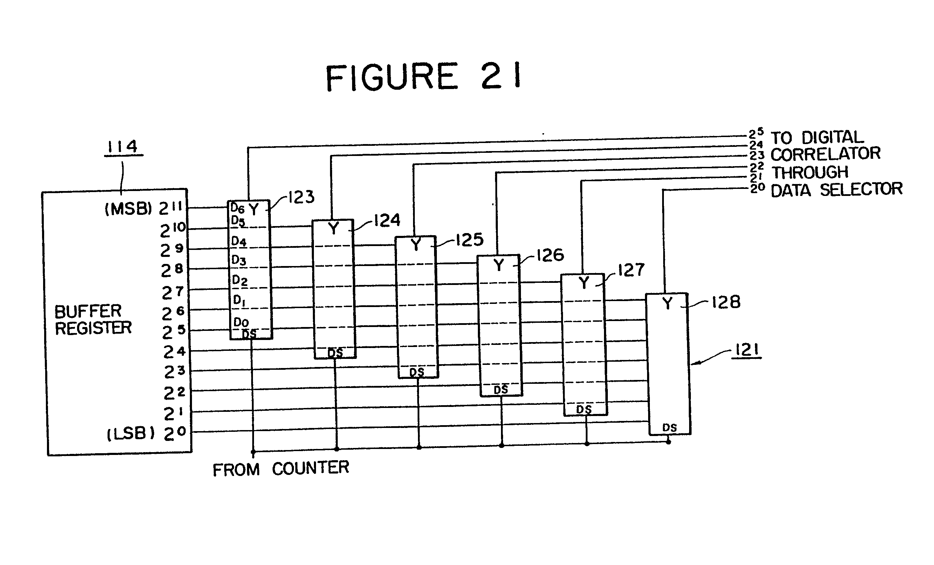

The maximum values of the input analogue signals are converted into digital quantities with a high resolution of 12 bits to form a detected flaw pattern, the detected flaw pattern is transferred to a succeeding stage separately in the form of significant digits of up to $2^6$ and an exponent of 2. More specifically, the detected flaw pattern is temporarily stored in the buffer register 114 of 12 bits×128, and the maximum value of the transferred detected flaw pattern which consists of 128 points is held in the digital peak hold circuit 115. After the detected flaw pattern is completely stored in the register 114, the maximum value is transferred to the universal shift register 116 which can shift the data to the right and left and up and down. The universal shift register 116 operates in the right-shift mode when it receives the maximum value and then switched to the down-shift mode. In response to clock pulses from the clock generator 119, a down-shift is repeated until data is absent in the upper 6 bits of the universal shift register 116 while confirming the existence of the data in the upper 6 bits of the register by the OR gate 117 and NAND gate 118. At this time, the number of downshifts is counted by the counter 120. The output value of the counter 120 is fed to address pins of the data selector 121, according to which 6 bits are selected from 12-bit output pins of the buffer register 114 by the data selectors 121 so that the significant digits of the maximum value of the detected flaw pattern in the buffer register 114 are expressed by 6 bits or a smaller number of bits. As shown in Figure 21, the data selector 121 is constituted by six selectors 123 to 128, the input ports of which are connected to the output pins of the buffer register 114 in the positions which are sequentially shifted by one bit. The compressed data of the detected flaw pattern which is selected by the data selector 121 is transferred to the correlator 42 for correlation processing as described hereinbefore. At this time, the significant digits are smaller than 6 bits when the data in the buffer register 114 are smaller than 6 bits.

Thus the above-described pre-processing circuit 112 permits the execution of the analogue to digital conversion with a high resolution and transfer of the input signal by the maximum number of digits conforming with the resolution of the digital correlator 42 in the subsequent stage. Accordingly, the data of up to 12 bits in the buffer register 114, for example, the data of $x(a)<2^{12}$ ($a=1, 2, 3, \ldots, 128$) are converted into and transferred to the digital correlator 42 in the form of $y(a)\times2^N$ ($y(a)<2^6$, $a=1, 2, 3, \ldots, 128$), so that detected flaw patterns with small amplitudes can be treated substantially with the same accuracy as flaw patterns with large amplitudes.

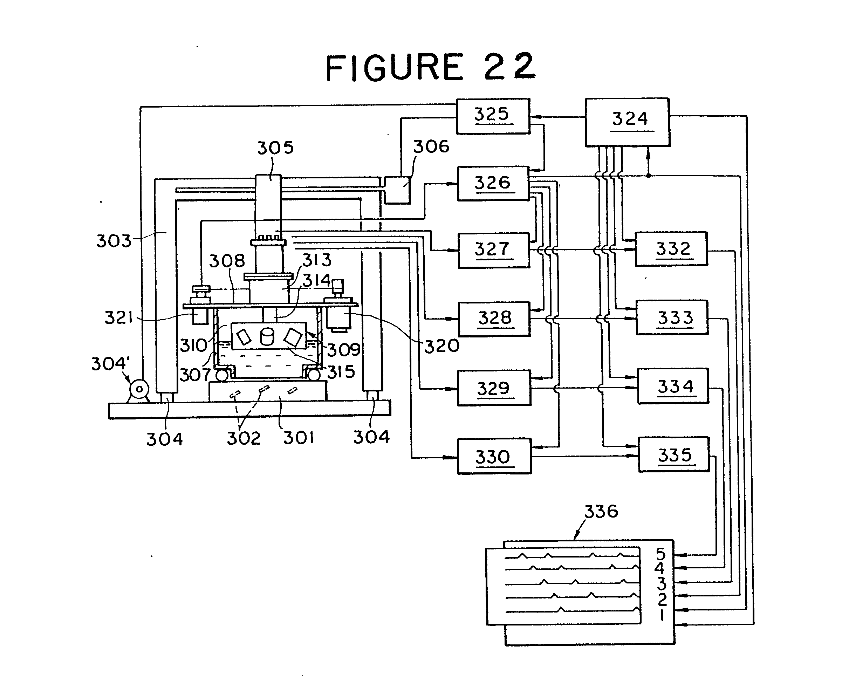

Referring to Figure 22, there is shown a modification, employing a carriage frame 303 which is driven from a motor 304 and movable back and forth (in Y-axis direction) along rails 304 fixed on the opposite sides of a material 302 under inspection with a cavity internal defect, and a movable frame 305 which is supported on the carriage frame 403 and movable in the transverse direction (X-axis direction). A tank 307 accommodates a probe rotating mechanism 309 and receives a supply of a liquid medium 310 in the same manner as in the first embodiment. The probe rotating mechanism 309 has a cylindrical shaft 314 which is rotatably supported in a bearing case 313 on a support plate 308, and a probe holder 315 is fixedly mounted at the lower end of the shaft 314 and has four inclined probes 316 to 319 built therein at intervals of 90° in the circumferential direction. The probes 316 to 319 have a refraction angle θ of, for example, 45° and are calibrated to project ultrasonic beams 316a to 319a of 9.2 mm diameter, respectively. The probes 316 to 319 are located at different distances from the centre of rotation so that the ultrasonic beams 316a to 319a intersect the axis of rotation at the depths of 2.5 mm, 7.5 mm, 12.5 mm and 17.5 mm, respectively. A motor 320 which drives the shaft 314 and a rotary encoder 321 which detects the rotation angle of the probe rotating mechanism 309, are mounted on the support plate 308 and coupled with the shaft 314 through belt driving mechanisms 322 and 323, respectively.

A system controller 324 consists of a microcomputer, a scan control 325 controls the movements of the probe rotating mechanism 309 in the X- and Y-axes direction, a pulse counter 326, and pulser receivers 327 to 330 are provided for the respective channels and connected to the corresponding probes 316 to 319 through a slip ring 331. There are analogue peak hold circuits 332 to 335, and a multi-pen recorder 336.

Similarly to the foregoing embodiments, for the detection of the defect 302 in the material 301, the probe holder 315 of the probe mechanism 309 is rotated about the shaft 314 and at the same time moved in the X- and Y-axis directions to scan the surface of the material 301, transmitting ultrasonic pulses 16a to 19a from the probes 316 to 319 and picking up the echoes from the defect 302 by the respective channels in the same manner as described hereinbefore.

As is clear from the foregoing description, the described embodiments of the present invention employ several probes directed at different depths on a rotary mechanism to transmit and receive ultrasonic pulses through a corresponding number of channels, forming a detected flaw pattern from the peak value of the echoes received at the flaw detection gate of each channel. By this way, the following formula is adopted to estimate the mean depth of a flaw:

$$d = \frac{\sum\limits_{i=1}^{4} Smi \cdot di}{\sum\limits_{i=1}^{4} Smi} \tag{14}$$

in which Smi is a maximum value of a detected flaw pattern for each channel.

**0 102 176**

Further, the following formula is used to compensate for the received sound pressure reduction due to the deviation of the central line of an ultrasonic beam at the reflecting surface of a flaw:

$$S'mi = \frac{Smi}{1-k' \mid d-di \mid} \tag{15}$$

in which $k'$ is proportional constant depending upon the probe.

Thus, flaw size can be estimated by referring to Distance-Amplitude curves and the $S'mi$ value. However, the inclination and the direction of a flaw are estimated by using equations (1) to (5).

According to the method of the invention, the efficiency of the flaw detection can be improved to a considerable degree since there is no necessity to repeat the inspection of the same portion several times at varied depths as in the conventional flaw detection by a single probe. Besides, the severity of a detected defect is judged on the basis of the direction, inclination, size and depth of the defect which are decipherable from the correlations of the detected pattern with reference patterns, so that judgement can be made easily and at a high speed by the use of a computer or hard-wired logic circuits, as compared with judgement from the detected flaw pattern itself. Moreover, the resolution of the input signals can be improved remarkably by the provision of the pre-processing circuit which employs an analogue to digital converter of high resolution and which is adapted to transfer the converted digital signals by a bit number conforming with the resolution of the correlator of the subsequent stage of the circuit.

In the arrangement of Figure 22 the output signals to the recorders 219, 336 are preferably passed to a correlation system such as is described with reference to the embodiment of Figure 5 and in particular with reference to Figure 8. The signals passed to the pen recorders 219, 336 may be passed to apparatus including the data selector 42, the digital correlator 43, memory 41, digital peak detector 44, data latch 45, shift register 47 and interface 48.

The signals may also be pre-processed in the manner described hereinbefore with reference to Figure 20.

## Claims

1. An ultrasonic flaw detection method for detecting internal cavity defects in a material, comprising:

providing on a rotary body a plurality of probes lying on equiangularly spaced radii and having the same angle of inclination with respect to the rotation axis, said probes being adapted to transmit and receive ultrasonic pulses along respective paths which intersect the axis of rotation of said rotary body;

turning said rotary body to revolve said probes through 360° about said axis of rotation while transmitting and receiving said ultrasonic pulses;

producing detected flaw patterns for each respective direction of incidence of said ultrasonic beams, from the peak values of the echoes received by the respective probes;

characterised by positioning said probes at different distances from the axis of rotation so that said respective paths intersect said axis of rotation at different depths in an inspection zone within the material when positioned opposite to said probes; and,

deciphering the direction, inclination, size and depth of a detected defect from correlation processing of said detected flaw patterns with a number of predetermined reference patterns to judge the severity of the detected defect.

2. An apparatus for ultrasonic flaw detection for recognising internal cavity defects in a material, comprising:

a plurality of probes (14—17, 316—319) mounted on a rotary body (13, 315) on equiangularly spaced radii and having the same angle of inclination with respect to the axis of rotation of said rotary body for providing a plurality of channels (CH1—CH4) for transmitting and receiving ultrasonic pulses along respective paths which intersect the axis of rotation (00') of said rotary body (13, 315);

drive means (18—21, 320, 321) for turning said rotary body (13, 315) to revolve said probes (14—17, 316—319) through 360° about said axis of rotation (00') while transmitting and receiving said ultrasonic pulses;

characterised in that said probes (14—17, 316—319) are mounted at different distances from the axis of rotation so that said paths intersect the axis of rotation (00') at different depths in an inspection zone within the material (2) when positioned opposite said probes (14—17, 316—319); peak holding and memory means (37—40, 322—335) are provided for each one of said channels (CH1—CH4) for producing and storing detected flaw patterns for each direction of incidence of said ultrasonic beam from the peak values of echoes received by the respective channels;

a correlator (41—48) is provided for deciphering the direction, inclination, size and depth of said detected defect by correlation processing of said detected flaw patterns with a number of predetermined reference patterns; and

means is provided for judging the severity of the detected defect according to the results of said correlation processing.

3. An apparatus as claimed in claim 2, wherein said rotary body (13, 211, 315) is supported on a scan

9

# 0 102 176

mechanism (205—208), movable in the transverse and longitudinal directions of the material to be inspected for scanning the axis of rotation (00') of said probes (14—17, 201, 316—319) across said material.

4. An apparatus as claimed in claim 1 or 2, wherein said rotary body (13, 211, 315) is a probe holder (13, 211, 315) fixedly mounted at the lower end of a vertical shaft (12, 210, 314) and accommodated in a water tank (6, 202, 301) with the lower ends of said probes (13, 211, 315) immersed in water in said tank.

5. An apparatus as claimed in claim 2 or 3 wherein a pulse signal detection gate (14b—17b) of each channel (CH1—CH4) is connected to said correlator (41—48) through a signal processor (111—121) including a pulser receiver (25—28), an analogue peak hold circuit (111), an analogue to digital converter (113), a shift register (114) and a data selector (121).

6. An apparatus as claimed in any of claims 2 to 4 wherein said detection gate (14b—17b) of each channel (CH1—CH4) is connected to said correlator (41—48) through a signal processor (111—121) including a signal pre-processing circuit comprising:

a high resolution analogue to digital converter (113) for converting analogue input signals into digital signals;

a buffer register (114) for storing said digital signals;

a digital peak holding circuit (115) for holding the peak value of said digital signals;

a shift register (116) for storing said peak value and adapted to repeat a shift until data becomes absent in a number of bits as determined by the resolution of a succeeding stage;

a counter (120) for counting the number of shifts of said shift register (116); and

a data selector (121) for compressing the data in said buffer register (114) from an upper position according to the output count of said counter (120) to select said data by a number of bits conforming with the resolution of said succeeding stage;

whereby the selected data is transferred to said succeeding stage separately by a significant digit part and an exponent of 2 corresponding to said output count of said counter (120).

**Patentansprüche**

1. Verfahren zur Ultraschallfehlerprüfung zur Feststellung von Innenlunkerfehlern in einem Material, das umfaßt:

Versehen eines Drehkörpers mit einer Mehrzahl von Sonden, die auf mit gleichen Winkeln beabstandeten Radien liegen und mit Bezug zur Drehachse den gleichen Neigungswinkel haben sowie imstande sind, längs jeweils zugeordneter, die Drehachse des Drehkörpersschneidender Bahnen Ultraschallimpulse zu übertragen und zu empfangen,

Drehen des Drehkörpers zum Umlauf der Sonden über 360° um die Drehachse während der Übertragung sowie des Empfangs der Ultraschallimpulse und

Erzeugen von festgestellten Fehlerstrukturen für jede jeweilige Einfallsrichtung der Ultraschallstrahlen aus den Spitzenwerten der von den jeweiligen Sonden empfangenen Echos, gekennzeichnet

durch Anordnen der Sonden mit unterschiedlichen Abständen von der Drehachse, so daß die jeweiligen Bahnen die Drehachse auf unterschiedlichen Tiefen in einer Prüfzone innerhalb des Materials bei dessen zu den Sonden gegenüberliegender Anordnung schneiden, und

durch Entschlüsseln der Richtung, Neigung, Größe und Tiefe eines festgestellten Fehlers aus einer Korrelationsverarbeitung der festgestellten Fehlerstrukturen mit einer Anzahl von vorbestimmten Bezugsstrukturen zur Beurteilung der Schwere des festgestellten Fehlers.

2. Vorrichtung zur Ultraschallfehlerprüfung zur Feststellung von Innenlunkerfehlern in einem Material mit einer Mehrzahl von an einem Drehkörper (13, 315) auf unter gleichen Winkeln beabstandeten Radien mit gleichen Neigungswinkeln mit Bezug zur Drehachse des Drehkörpers angeordneten Sonden (14—17, 316—319), um eine Mehrzahl von Bahnen (CH1—CH4), zur Übertragung und zum Empfang von Ultraschallimpulsen längs jeweiligen Bahnen, die die Drehachse (00') des Drehkörpers (13, 315) schneiden, zu bilden, und

mit den Drehkörper (13, 315) zum Umlauf der Sonden (14—17, 316—319) über 360° um die Drehachse (00') während der Übertragung sowie des Empfangs der Ultraschallimpulse in Umdrehung versetzenden Antriebseinrichtungen (18—21, 320, 321), dadurch gekennzeichnet,

daß die Sonden (14—17, 316—319) mit unterschiedlichen Abständen von der Drehachse angeordnet sind, so daß die Bahnen die Drehachse (00') in unterschiedlichen Tiefen in einer Prüfzone des Materials (2) bei dessen zu den Sonden gegenüberliegender Anordnung schneiden, daß für jeden der Kanäle (CH1—CH4) Spitzenwerthalte- und Speichereinrichtungen (37—40, 322—335) vorgesehen sind, um festgestellte Fehlerstrukturen für jede Einfallsrichtung der Ultraschallstrahlen aus den Spitzenwerten der von den jeweiligen Kanälen empfangenen Echos zu erzeugen und zu speichern,

daß ein Korrelator (41—48) zur Entschlüsselung der Richtung, Neigung, Größe und Tiefe des festgestellten Fehlers durch eine Korrelationsverarbeitung der festgestellten Fehlerstrukturen mit einer Anzahl von vorbestimmten Bezugsstrukturen vorgesehen ist und

daß eine Einrichtung zur Beurteilung der Schwere des festgestellten Fehlers in Übereinstimmung mit den Ergebnissen der Korrelationsverarbeitung vorgesehen ist.

3. Vorrichtung nach Anspruch 2, dadurch gekennzeichnet, daß der Drehkörper (13, 211, 315) auf einem Abtastmechanismus (205—208) gelagert ist, der zur Abtastung der Drehachse (0, 0') der Sonden (14—17,

10

201, 316—319) über das Material in der Quer- sowie Längsrichtung des zu prüfenden Materials hinweg bewegbar ist.

4. Vorrichtung nach Anspruch 2 oder 3, dadurch gekennzeichnet, daß der Drehkörper (13, 211, 315) ein fest am unteren Ende einer vertikalen Welle (12, 210, 314) angebrachter und in einem Wasserbehälter (6, 202, 301) aufgenommener Sondenträger (13, 211, 315) ist, wobei die unteren Enden der Sonden (13, 211, 315) in das Wasser im Behälter eingetaucht sind.

5. Vorrichtung nach Anspruch 2 oder 3, dadurch gekennzeichnet, daß ein Impulssignalerfassungstor (14b—17b) eines jeden Kanals (CH1—CH4) mit dem Korrelator (41—48) durch einen Signalprozessor (111—121), der einen Impulsempfänger (25—28), eine Analog-Spitzenwerthalteschaltung (111), einen Analog-/Digitalwandler (113), ein Schieberegister (114) und einen Datenauswähler (121) umfaßt, verbunden ist.

6. Vorrichtung nach einem der Ansprüche 2 bis 4, dadurch gekennzeichnet, daß das Erfassungstor (14b—17b) eines jeden Kanals (CH1—CH4) mit dem Korrelator (41—48) durch einen Signalprozessor (111—121) mit einem Signalvorverarbeitungskreis verbunden ist, welcher umfaßt:

einen Analog-/Digitalwandler (113) von hoher Auflösung, der analoge Eingangssignale in digitale Signale umsetzt,

ein die digitalen Signale speicherndes Pufferregister (114),

eine Digital-Spitzenwerthalteschaltung (115), die den Spitzenwert der digitalen Signale hält,

ein den Spitzenwert speicherndes Schieberegister (116), das zu einer Wiederholung einer Verschiebung imstande ist, bis Daten in einer von durch die Auflösung einer folgenden Stufe bestimmten Anzahl von Bits frei werden,

ein die Anzahl der Verschiebungen des Schieberegisters (116) zählendes Zählregister (120) und

einen Datenwähler (121), der die Daten im Pufferregister (114) von einer oberen Stelle gemäß dem Ausgangszählwert des Zählregisters (120) verdichtet, um die Daten durch eine mit der Auflösung der folgenden Stufe übereinstimmende Anzahl von Bits auszuwählen,

wobei die ausgewählten Daten zur folgenden Stufe durch einen signifikanten Zifferenteil und einen Exponenten von 2 entsprechend dem Ausgangszählwert des Zählregisters (120) übertragen werden.

**Revendications**

1. Procédé de détection de défauts par ultrasons pour détecter des défauts en forme de cavités internes dans un matériau, consistant à:

disposer sur un corps rotatif une pluralité de sondes situées sur des rayons équidistants angulairement et inclinés du même angle par rapport à l'axe de rotation, lesdites sondes étant aptes à émettre et recevoir des impulsions ultrasonores le long de trajets respectifs qui coupent l'axe de rotation dudit corps rotatif;

faire tourner ledit corps rotatif de manière à entraîner en rotation lesdites sondes sur 360° autour dudit axe de rotation tout en émettant et recevant lesdites impulsions ultrasonores;

produire des diagrammes de défauts pour chaque direction respective d'incidence desdits faisceaux ultrasonores, à partir des valeurs de pointes des échos reçus par les sondes respectives;

caractérisé en ce qu'on positionne lesdites sondes à des distances différentes de l'axe de rotation de telle sorte que lesdits trajets respectifs coupent ledit axe de rotation à des profondeurs différentes dans une zone d'examen à l'intérieur du matériau dans le cas où cette zone est positionnée en face desdites sondes; et

déchiffrer la direction, l'inclinaison, les dimensions et la profondeur d'un défaut détecté à partir d'un traitement de corrélation desdits diagrammes de défauts détectés, avec un nombre de diagrammes prédéterminés de référence de manière à évaluer la gravité des défauts détectés.

2. Appareil de détection de défauts par ultrasons, pour identifier des défauts formés de cavités internes dans un matériau, comprenant:

une pluralité de sondes (14—17, 316—319) montées sur un corps rotatif (13, 315) sur des rayons équidistants angulairement, et possédant le même angle d'inclinaison par rapport à l'axe d'inclinaison dudit corps rotatif de manière à fournir une pluralité de canaux (CH1—CH4) pour l'émission et la réception d'impulsions ultrasoniques le long de trajets respectifs qui coupent l'axe de rotation (00') dudit corps rotatif (13, 315);

des moyens d'entraînement (18—21, 320, 321) servant à entraîner en rotation ledit corps rotatif (13, 315) de manière à faire fourner lesdites sondes (14—17, 307—319) sur 360° autour dudit axe de rotation (00') alors qu'elles émettent et recoivent lesdites impulsions ultrasonores;

caractérisé en ce que lesdites sondes (14—17, 316—319) sont montées à des distances différentes de l'axe de rotation de sorte que lesdits trajets coupent l'axe de rotation (00') à des profondeurs différentes dans une zone d'examen située à l'intérieur du matériau (2) lorsque cette dernière est disposée en face desdites sondes (14—17, 307—319); en ce que des moyens (37—40, 322—335) de retenue et de mémoire des valeurs de fonte sont prévus pour chacun desdits canaux (CH1—CH4) de manière à produire et mémoriser des diagrammes de défauts détectés pour chaque direction d'incidence dudit faisceau d'ultrasons, à partir des valeurs de pointe des échos reçus par les canaux respectifs;

en ce qu'il est prévu un corrélateur (41—48) servant à déchiffrer la direction d'une inclinaison, les

# 0 102 176

dimensions et la profondeur dudit défaut détecté au moyen d'un traitement de corrélation desdits diagrammes de défauts détectés avec un nombre de diagrammes de référence prédétermine;

et en ce qu'il est prévu des moyens pour évaluer la gravité du défaut détecté, conformément au résultat dudit traitement de corrélation.

3. Appareil selon la revendication 2, dans lequel ledit corps rotatif (13, 211, 315) est supporté par un mécanisme d'exploration par balayage (205—208), déplaçable dans les directions transversale et longitudinale du matériau devant être examiné, pour réaliser l'exploration par balayage de l'axe de rotation (00') desdites sondes (14—17, 201, 316—319) à travers ledit matériau.

4. Appareil selon la revendication 1 ou 2, dans lequel ledit corps rotatif (13, 211, 315) est un porte-sonde (13, 211, 315) monté fixe sur l'extrémité inférieure d'un arbre vertical (12, 210, 314) et logé dans une cuve à eau (6, 202, 301), les extrémités inférieures desdites sondes (13, 211, 315) étant immergées dans l'eau située dans ladite cuve.

5. Appareil selon la revendication 2 ou 3, dans lequel une porte (14b—17b) de détection de signaux impulsionnels de chaque canal (CH1—CH4) est raccordée auxdits corrélateurs (41—48) par l'intermédiaire d'un processeur de signaux (111, 121) comportant un récepteur d'impulsions (25—28), un circuit analogique (111) de conservation des pointes, un convertisseur analogique/numérique (113), un registre à décalage (114) et un sélecteur de données (121).

6. Appareil selon l'une quelconque des revendications 2 à 4, dans lequel ladite porte de détection (14b—17b) de chaque canal (CH1—CH4) est raccordée audit corrélateur (41—48) par l'intermédiaire d'un processeur de signaux (111—121) incluant un circuit de prétraitement des signaux comprenant:

un convertisseur analogique/numérique (113) de haute résolution servant à convertir les signaux d'entrée analogiques en signaux numériques;

un registre tampon (114) servant à mémoriser lesdits signaux numériques;

un circuit (115) de conservation des pointes numériques servant à conserver la valeur de pointe desdits signaux numériques;

un registre à décalage (116) servant à mémoriser ladite valeur de pointe et apte à répéter un décalage jusqu'à ce que les données soient absentes dans un nombre de bits tels que déterminés par la résolution d'un étage suivant;

un compteur (120) servant à compter le nombre des décalages dudit registre (116); et

un sélecteur de données (121) servant à comprimer les données situées dans ledit registre tampon (114) à partir d'une position supérieure, conformément à l'état dé comptage de sortie dudit compteur (120), pour réaliser la sélection desdites données selon un nombre de bits conformément à la résolution dudit étage suivant;

ce qui a pour effet que les données sélectionnées sont transférées dans ledit étage suivant séparément sous la forme d'une partie numérique significative et d'une puissance de 2 correspondant audit état de comptage de sortie dudit compteur (120).

# FIGURE I

(A)

(B)

# FIGURE 2

PEAK VALUE OF ECHOES FROM FLAW

0   90°   $\alpha_1$   180°   $\alpha_2$   270°   360°

DIRECTION OF INCIDENCE $\alpha$

# FIGURE 3

$r_1(\alpha)$

FLAW PATTERN

$r_2(\alpha)$

$r_3(\alpha)$

$r_4(\alpha)$

$f(\alpha+s)$

$s$

CORRELATING OPERATION

$r_4(\alpha)$

$r_5(\alpha)$

REFERENCE PATTERNS

# FIGURE 4

FIGURE 5

# FIGURE 6

# FIGURE 7

FIGURE 8

CH1 25 29 33 37

CH2 26 30 34 38

CH3 27 31 35 39

42

43 44

45 46

47

48 → TO COMPUTER

CH4 28 32 36 40

41

49

7

23 24

3 2

0 102 176

# FIGURE 9

# FIGURE 10

# FIGURE 11

(A)

(B)

# FIGURE 12

LENGTH OF FLAW $\ell$ (mm)

0 102 176

FIGURE 13

0 102 176

# FIGURE 14

**START**

```
i = 1 TO 4
j = O TO 45 STEP 5
( 4—N IN GENERAL
   FORMULA )
```

CALCULATE Rji(S)

GET S OF MAXIMUM Rji(S)
AND APPLY IT TO Rji(Sj)

NEXT j

GET MAXIMUM VALUE OF j
IN Rji(Si) REGARDING Si
AS $\tau$ AND j AS m INDICATE
THE MAXIMUM VALUE BY Cmi($\tau$)

NEXT i

CALCULATE DEPTH OF
FLAW FROM Cmi($\tau$)

$$d = \frac{\sum_{i=1}^{4} d_i C_{mi}(\tau)}{\sum_{i=1}^{4} C_{mi}(\tau)} \quad (7)$$

TAKE MAXIMUM i in Cmi
AS i  CORRECT CORRELATION
VALUE OF i ACCORDING TO Eq(8)
$C_{mio}(\tau) = \{ 1 + k \frac{|d - d_i|}{d_i} \}$  (8)

CALCULATE LENGTH OF CAVERN
FLAW FROM Cmi AND
APPLY IT TO 1

CALCULATE DEPTH AND
PROJECTED LENGTH OF FLAW
FROM Eqs (1O) & (11)

JUDGE HARMFULNESS OF
FLAW FROM Eqs (12) & (13)

**HARMFUL ?**  NO  YES

INDICATE PROJECTED LENGTH
DEPTH,& X-Y POSITION OF
FLAW ON CRT DISPLAY
STORE SAME DATA IN MEMORY

**DETECTION END?**  NO  YES

STORE DETECTAL FLAW DATA
IN FLOPPY

**END**

9

# FIGURE 15

# FIGURE 16

FIGURE 17

# FIGURE 18

(A)

FULL SCALE

CONVERSION TIME

| | MSB | | LSB |
|---|---|---|---|
| | I | I | I |
| | I | I | O |
| | I | O | I |
| | O | I | I |
| | O | O | I |
| | O | O | O |

TIME

(B)

| | MSB | | LSB |
|---|---|---|---|
| | O | I | O |
| | O | O | I |
| | O | O | O |

TIME

# FIGURE 19

A/D FULL SCALE

RESOLVE INTO 12 BITS

10V

TIME

12

# FIGURE 20

ANALOG PEAK HOLD — 111

A/D CONVERTER — 113

BUFFER REGISTER — 114

DATA SELECTOR — 121

DIGITAL PEAK HOLD — 115

UNIVERSAL SHIFT REGISTER — 116

117

CLOCK GENERATOR — 119

118

COUNTER — 120

TO DIGITAL CORRELATOR THROUGH DATA SELECTOR

EXPONENT OF 2

0 102 176

13

# FIGURE 21

BUFFER
REGISTER

(MSB) $2^{11}$
$2^{10}$
$2^9$
$2^8$
$2^7$
$2^6$
$2^5$
$2^4$
$2^3$
$2^2$
$2^1$
(LSB) $2^0$

114

123
124
125
126
127
128

121

$D_6$ Y
$D_5$
$D_4$
$D_3$
$D_2$
$D_1$
$D_0$
DS

Y
DS

Y
DS

Y
DS

Y
DS

Y
DS

$2^5$ TO DIGITAL
$2^4$
$2^3$ CORRELATOR
$2^2$
$2^1$ THROUGH
$2^0$ DATA SELECTOR

FROM COUNTER

0 102 176

FIGURE 22